# EUROPÄISCHE PATENTSCHRIFT

(11) **EP 1 967 535 B1**
(45) Veröffentlichungstag und Bekanntmachung des Hinweises auf die Patenterteilung: **18.11.2009**
(21) Anmeldenummer: 08152091.8
(22) Anmeldetag: 28.02.2008
(51) Int. Cl.: C08G 18/09, C08G 18/22

(54) **Kompaktes Polyisocyanurat mit verbesserten Verarbeitungs-und Produkteigenschaften sowie verfahren zu seiner Herstellung**
Compact polyisocyanurates with improved processing and product characteristics and method for production of same
Polyisocyanate compact à traitement amélioré et polyisocyanate compact à caractéristiques de traitement et de production améliorées et son procédé de fabrication

(30) Priorität: 05.03.2007 EP 07103487
(43) Veröffentlichungstag der Anmeldung: 10.09.2008
(73) Patentinhaber: BASF SE, 67056 Ludwigshafen (DE)
(72) Erfinder: Redl, Franz Xaver, Shanghai, 201204 (CN); Neuhaus, Bert, 49356, Diepholz (DE); Illguth, Rolf, 49356, Diepholz (DE); Olthuis, Mathias, 49082, Osnabrück (DE)

(56) Entgegenhaltungen:
- EP-A- 0 118 725
- EP-A- 0 361 937
- EP-A- 1 671 993
- US-A- 4 299 924
- DENISOV A ET AL: "CATALYSIS OF CYCLOTRIMERIZATION OF ISOCYANATES BY METAL CARBOXYLATION WITH SPECIAL REFERENCE TO THE PREPARATION OF POLYISOCYANURATE RIGID FOAM MATERIALS" SYSPUR, VEB SYNTHESEWERK SCHWARZHEIDE, DE, Bd. 19, 1. Januar 1981 (1981-01-01), Seiten 157-161, XP009077355 ISSN: 0138-2128

## Beschreibung

Die vorliegende Erfindung betrifft ein Polyisocyanuratsystem zur Herstellung eines kompakten Polyisocyanurats, enthaltend (a) Polyisocyanate auf Basis von aromatischen Isocyanaten mit einer Funktionalität von kleiner 2,5, (b) Verbindungen mit gegenüber Isocyanaten reaktiven Gruppen, enthaltend mindestens 40 % sekundäre Hydroxylgruppen, (c) Katalysatoren, enthaltend Kaliumformiat, und gegebenenfalls (d) Kettenverlängerer und (e) Füllstoffe und weitere Additive. Weiter betrifft die vorliegende Erfindung ein kompaktes Polyisocyanurat und ein Verfahren zur Herstellung eines kompakten Polyisocyanurats.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

WO 2004/111101 offenbart ein Polyisocyanuratmaterial, bei dem man 4,4'-Diphenylmethandiisocyanat oder Derivate davon mit einer Polyolkomponente, enthaltend 80 bis 100 Gew.-% eines Polyetherols mit einer Funktionalität von 2 bis 6 und einen Ethylenoxidgehalt von 75 bis 100 % und 20-0 Gew.-% eines oder mehrerer, weiterer isocyanatreaktiver Komponenten unter Verwendung eines Trimerisierungskatalysators, beispielsweise einem Natrium- oder Kaliumsalz einer Carbonsäure umsetzt. Solche Polyisocyanurate haben nur eine kurze offene Zeit und können daher nur schwer zu großen Teilen verarbeitet werden.

WO 00/29459 offenbart Polyisocyanuratsysteme zur Herstellung verstärkter Polyisocyanurate, enthaltend eine Polyolkomponente, beispielsweise ein Polypropylenglykol, eine Isocyanatkomponente, beispielsweise eine Mischung aus 60 Gew.-% 4,4'-MDI, 20 Gew.-% 2,4'-MDI und 20 Gew.-% Polymeres MDI, gegebenenfalls Kettenverlängerer und einen Katalysator, beispielsweise Kaliumoktanoat. Solche Polyisocyanurate haben ebenfalls nur eine kurze offene Zeit. Weiter eignen sich diese Polyisocyanurate nicht als Verkleidungen von Maschinen oder Fahrzeugen, da diese Teile eine zu geringe Kerbschlagzähigkeit und Bruchdehnung aufweisen.

EP 1 671 993 offenbart Kunststoffformteile aus gefülltem Polyisocyanurat mit hoher Zähigkeit, Biegefestigkeit und Wärmeformbeständigkeit, wobei eine Polyolkomponente und eine Füllstoff enthaltende Polyolkomponente, die entweder eine Polyharnstoff enthaltende Polyoldispersion oder eine Polyisocyanat-Polyadditionsprodukte enthaltende Polyoldispersion ist, eingesetzt werden. Nachteilig an diesen Formulierungen ist die kurze offene Zeit und damit ein schneller Viskositätsanstieg der Reaktionsmischung sowie eine hohe Grundviskosität, wodurch Polyisocyanuratsysteme nach EP 1 671 993 nicht für die Herstellung großer und komplexer Formteile geeignet sind.

Aufgabe der vorliegenden Erfindung war es, ein Polyisocyanuratsystem zu liefern, das eine geringe Grundviskosität und eine lange offene Zeit und damit einen nach dem Vermischen zur Reaktionsmischung zunächst einen langsamen Anstieg der Viskosität aufweist, wodurch das Füllen großer Formen und das Formen mit komplizierten Geometrien möglich wird. Weiter war es Aufgabe, ein solches Polyisocyanuratsystem zu liefern, das nach Anspringen der Reaktion eine schnelle Durchreaktion zum entformbaren Fertigteil ermöglicht. Weiter war es Aufgabe der vorliegenden Erfindung ein Polyisocyanuratsystem zu liefern, das sich zur Herstellung von Verkleidungsteilen von Maschinen eignet. Insbesondere war es Aufgabe, ein Polyisocyanuratsystem zu liefern, das sich zur Herstellung von Polyisocyanuraten mit hoher Wärmeformbeständigkeit, hoher Schlagzähigkeit, hoher Bruchdehnung und hoher Steifigkeit bei hoher Elastizität eignet.

Die erfindungsgemäße Aufgabe wird durch ein Polyisocyanuratsystem zur Herstellung eines kompakten Polyisocyanurats gelöst, enthaltend (a) Polyisocyanate auf Basis von aromatischen Isocyanaten mit einer Funktionalität von kleiner 2,5, (b) Verbindungen mit gegenüber Isocyanaten reaktiven Gruppen, enthaltend mindestens 40 % sekundäre Hydroxylgruppen, (c) Katalysatoren, enthaltend Kaliumformiat, und gegebenenfalls (d) Kettenverlängerer und (e) Füllstoffe und weitere Additive.

Im Rahmen der vorliegenden Erfindung wird unter einem Polyisocyanuratsystem eine Zusammenstellung von Einsatzstoffen zur Herstellung eines Polyisocyanurats verstanden. Dabei können diese Stoffe getrennt oder als Mischungen einzelner Komponenten vorliegen. Häufig liegen Polyisocyanuratsysteme als 2-Komponentensysteme vor, bestehend aus einer Isocyanatkomponente, enthaltend (a) Polyisocyanate, und einer Polyolkomponente, enthaltend (b) Verbindungen mit gegenüber Isocyanaten reaktiven Gruppen, (c) Katalysatoren und gegebenenfalls (d) Kettenverlängerer und (e) Füllstoffe und weitere Additive.

Als Polyisocyanurate im Sinne der vorliegenden Erfindung werden dabei polymere Isocyanataddukte verstanden, die neben Urethangruppen noch weitere Gruppen enthalten. Diese weiteren Gruppen entstehen beispielsweise durch Reaktion der Isocyanatgruppe mit sich selbst, wie Isocyanuratgruppen, oder durch die Reaktion der Isocyanatgruppen mit anderen Gruppen als mit Hydroxylgruppen, wobei die genannten Gruppen meist gemeinsam mit den Urethangruppen im Polymer vorliegen. Der Isocyanatindex von Polyisocyanuraten im Sinn der Erfindung ist 150 und größer, bevorzugt 150 bis 700, besonders bevorzugt 180 bis 400.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Als kompaktes Polyisocyanurat wird ein Polyisocyanurat bezeichnet, das im wesentlichen frei von Gaseinschlüssen ist. Vorzugsweise ist die Dichte eines kompakten Polyisocyanurats größer 0,8 g/cm³, besonders bevorzugt größer 0,9 g/cm³ und insbesondere größer 1,0 g/cm³.

Die im erfindungsgemäßen Polyisocyanuratsystem enthaltenen Polyisocyanate (a) umfassen alle zur Herstellung von Polyurethanen bekannten aromatischen Isocyanaten mit einer Funktionalität von kleiner 2,5. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphthylendiisocyanat (NDI) oder Mischungen daraus, wobei jeweils die mittlere Funktionalität der Polyisocyanate (a) kleiner 2,5 ist.

Vorzugsweise werden als Polyisocyanate (a) monomeres Diphenylmethandiisocyanat, beispielsweise 2,2'- Diphenylmethandiisocyanat, 2,4'- Diphenylmethandiisocyanat, 4,4'- Diphenylmethandiisocyanat oder Mischungen daraus, bevorzugt 4,4'- Diphenylmethandiisocyanat , eingesetzt. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, Carbodiimid, uretdion-, allophanat- oder uretoniminmodifiziertes Diphenylmethandiisocyanat, insbesondere Carbodiimid modifiziertes Diphenylmethandiisocyanat, enthalten.

Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Der NCO-Gehalt erfindungsgemäßer Polyisocyanatprepolymere beträgt vorzugsweise von 5 bis 25 Gew.-% NCO, besonders bevorzugt von 15 bis 22 Gew.-% NCO.

Polyole (a-2) sind dem Fachmann bekannt und beispielsweise beschrieben im "Kunststoffhandbuch, Band 7, "Polyurethane", Carl Hanser-Verlag, 3. Auflage 1993, Kapitel 3.1. So können beispielsweise als Polyole Polyether- oder Polyesterole, wie die nachfolgend unter (b) beschriebenen Polyole, eingesetzt werden. Vorzugsweise werden als Polyole (a-2) Polyole, enthaltend sekundäre OH-Gruppen, eingesetzt, wie beispielsweise Polypropylenoxyd. Die Polyole (a-2) besitzen dabei vorzugsweise eine Funktionalität von 2 bis 4, besonders bevorzugt von 2 bis 3. Besonders bevorzugt enthalten die Polyole (a-2) Polyesterole, enthaltend hydrophobe Stoffe, wie unter (b) beschrieben.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol oder die Addukte von Dipropylenglykol und/oder Tripropylenglykol mit Alkylenoxiden, bevorzugt Dipropylenglycol, geeignet.

Besonders bevorzugt wird als Polyisocyanat (a) eingesetzt ein Polyisocyanatprepolymer auf Basis von monomerem 4,4'- Diphenylmethandiisocyanat oder Mischungen von 4,4'- Diphenylmethandiisocyanat mit dessen Derivaten, insbesondere 4,4'- Diphenylmethandiisocyanat, das bis etwa 10 Gew.-%, Carbodiimid modifiziertes 4,4'-Diphenylmethandiisocyanat enthält, und Polypropylenoxid mit einer Funktionalität von 2 bis 4 sowie gegebenenfalls Dipropylenglycol.

Als Verbindungen mit gegenüber Isocyanaten reaktiven Gruppen (b), im Rahmen dieser Erfindung auch als "Polyole" bezeichnet, können alle Verbindungen eingesetzt werden, die zumindest zwei gegenüber Isocyanaten reaktiven Gruppen, wie OH-, SH-, NH- und CH-acide Gruppen aufweisen, wobei der Anteil an sekundären OH-Gruppen, bezogen auf die Anzahl an gegenüber Isocyanaten reaktiven Gruppen, mindestens 40 %, bevorzugt mindestens 60 %, besonders bevorzugt mindestens 80 % und insbesondere mindestens 95 % beträgt.

Gewöhnlich werden Polyetherole und/oder Polyesterole mit 2 bis 8 mit Isocyanat reaktiven Wasserstoffatomen eingesetzt. Die OH-Zahl dieser Verbindungen liegt üblicherweise im Bereich von 30 bis 850 mg KOH /g , vorzugsweise im Bereich von 50 und 600 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,2-Propylenoxid, oder 1,2- bzw. 2,3-Butylenoxid, jeweils alleine oder in Form von Mischungen, und vorzugsweise 1,2-Propylenoxid, 1,2-Butylenoxid und/oder 2,3-Butylenoxid, insbesondere 1,2-Propylenoxid eingesetzt.

Als Startermoleküle kommen beispielsweise Ethylenglycol, Diethylenglycol, Glycerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen wie Ethylenglycol, Diethylenglycol, Butandiol, Trimethylolpropan, Glycerin oder Pentaerythrit mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mitverwendet werden. Bei den hydrophoben Stoffen handelt es sich um wasserunlösliche Stoffe, die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren wie Stearinsäure, Ölsäure, Palmitinsäure, Laurinsäure oder Linolsäure sowie Fette und Öle wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol-%, besonders bevorzugt 4 bis 15 Mol-%.

Die eingesetzten Polyesterole haben vorzugsweise eine Funktionalität von 1,5 bis 5, besonders bevorzugt 1,8 bis 3,5.

Besonders bevorzugt werden als Verbindungen mit gegenüber Isocyanaten reaktiven Gruppen (b) ausschließlich Polyetherole auf Basis von 1,2 Propylenoxid mit einer Funktionalität von 2 bis 4, bevorzugt 2 bis 3 und einer OH-Zahl von 40 bis 200 mg KOH/g eingesetzt.

Als Katalysator (c) wird Kaliumformiat eingesetzt. Weiter können als Katalysator (c) neben Kaliumformiat alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutylzinndiacetat, Dibutylzinndilaurat, Dibutylzinnmaleat und Dioctylzinndiacetat sowie Bismutcarboxylate wie Bismut-(III)-neodecanoat, Bismut-2-etyhlhexanoat und Bismut-octanoat oder Mischungen in Betracht. Weitere mögliche Katalysatoren sind stark basische Aminkatalysatoren. Beispiele hierfür sind Amidine wie 2,3-Dimethyl-3,4,5,6-tetrahydropyrimidin, tertiäre Amine wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen wie Triethanolamin, Triisopropanolamin, N-Methyl- und N-Ethyl-diethanolamin und Dimethylethanolamin. Die Katalysatoren können einzeln oder als Mischungen verwendet werden.

Ferner kommen als Katalysatoren in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide wie Tetramethylammoniumhydroxid, Alkalihydroxide wie Natriumhydroxid und Alkalialkoholate wie Natriummethylat und Kaliumisopropylat sowie Alkalisalze von langkettigen Fettsäuren mit 8 bis 20 C-Atomen und gegebenenfalls seitenständigen Hydroxylgruppen.

Vorzugsweise beträgt der Anteil von Kaliumformiat zumindest 50 Gew.-%, bevorzugt zumindest 75 Gew.-%, besonders bevorzugt zumindest 90 Gew.-%, bezogen auf das Gesamtgewicht des Katalysators (c). Insbesondere wird als Katalysator (c) ausschließlich Kaliumformiat eingesetzt.

Die Katalysatoren (c) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Bei der Herstellung eines erfindungsgemäßen Verbundstoffs kann ein Kettenverlängerungsmittel (d) eingesetzt werden. Dabei kann auch jedoch auf das Kettenverlängerungsmittel (d) verzichtet werden. Zur Modifizierung der mechanischen Eigenschaften, z. B. der Härte, kann sich allerdings der Zusatz von Kettenverlängerungsmitteln, Vernetzungsmitteln oder gegebenenfalls auch Gemischen davon als vorteilhaft erweisen.

Werden niedermolekulare Kettenverlängerungsmittel und/oder Vernetzungsmittel (d) eingesetzt, können bei der Herstellung von Polyurethanen bekannten Kettenverlängerer eingesetzt werden. Dies sind vorzugsweise niedermolekulare Verbindungen mit gegenüber Isocyanaten reaktiven Verbindungen, beispielsweise Glycerin, Trimethylolpropan, Ethylenglycol, Dipropylenglycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben. Wird ein Kettenverlängerungsmittel eingesetzt, wird bevorzugt Dipropylenglycol verwendet.

Als Füllstoffe und weitere Additive (e) können übliche Füllstoffe, und sonstige Zusatzstoffe wie Additive zur Wasseradsorption, Flammschutzmittel, Hydrolyseschutzmittel, Antioxidantien und interne Trennmittel eingesetzt werden. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Als Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Quarzmehle, Schichtsilikate wie Antigorit, Serpentin, Hornblenden, Amphibole, Chrisotil und Talkum; Metalloxide wie Kaolin, Aluminiumoxide, Titanoxide und Eisenoxide, Metallsalze wie Kreide, Schwerspat und anorganische Pigmente wie Cadmiumsulfid, Zinksulfid sowie Glas und andere. Vorzugsweise verwendet werden Kaolin (China Clay), Quarzmehle, Aluminiumsilikat und Copräzipitate aus Bariumsulfat und Aluminiumsilikat sowie natürliche und synthetische faserförmige Mineralien wie Wollastonit, Metall- und Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Vorzugsweise werden als Füllstoffe solche mit einem mittleren Teilchendurchmesser von 0,1 bis 500, besonders bevorzugt von 1 bis 100 und insbesondere von 1 bis 10 µm eingesetzt. Dabei wird unter Durchmesser bei nicht kugelförmigen Teilchen deren Ausdehnung entlang der kürzesten Raumachse verstanden. Bei nicht kugelförmigen Teilchen, beispielsweise Fasern wie Glasfasern, ist die Ausdehnung entlang ihrer längsten Raumachse vorzugsweise kleiner 500 µm, besonders bevorzugt kleiner 300 µm. Bevorzugt werden als Füllstoffe Glasfasern oder Quarzmehle eingesetzt. Weiter können auch Gewebematten wie Glasfasermatten oder Naturfasermatten als Füllstoffe eingesetzt werden.

Die anorganischen und organischen Füllstoffe können einzeln oder als Gemische verwendet werden und werden der Reaktionsmischung vorteilhafterweise in Mengen von 0,5 bis 30 Gew.-%, vorzugsweise 1 bis 20 Gew.-%, bezogen auf das Gewicht der Komponenten (a) bis (e), einverleibt.

Als Additive zur Wasseradsorption werden vorzugsweise Aluminosilikate, ausgewählt aus der Gruppe der Natriumaluminasilikate, Kaliumaluminasilikate, Calciumaluminasilikate, Cäsiumaluminasilikate, Bariumaluminasilikate, Magnesiumaluminasilikate, Strontiumaluminasilikate, Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additiv zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem.

Wenn ein Additiv zur Wasserabsorption zugegeben wird, geschieht dies vorzugsweise in Mengen größer einem Gewichtsteil, besonders bevorzugt im Bereich von 1,2 bis 2 Gewichtsteilen, bezogen auf das Gesamtgewicht des Polyisocyanuratsystems.

Als Flammschutzmittel können im allgemeinen die aus dem Stand der Technik bekannten Flammschutzmittel verwendet werden. Geeignete Flammschutzmittel sind beispielsweise bromierte Ether (lxol B 251), bromierte Alkohole wie Dibromneopentylalkohol, Tribromneopentylalkohol und PHT-4-Diol sowie chlorierte Phosphate, wie z. B., Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate wie Melamin oder Mischungen aus mindestens zwei Flammschutzmitteln, wie Ammoniumpolyphosphaten und Melamin sowie gegebenenfalls Stärke zum Flammfestmachen der erfindungsgemäß hergestellten Polyurethan-Hartschaumstoffe verwendet werden.

Als weitere flüssige halogenfreie Flammschutzmittel können Diethylethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (b) bis (e) verwendet.

Als interne Trennmittel können alle bei der Herstellung von Polyurethanen üblichen Trennmittel verwendet werden, beispielsweise in Diamin gelöste Metallsalze wie Zinkstearat und Derivate von Polyisobutylenbernsteinsäure.

Ein erfindungsgemäßes Polyisocyanuratsystem weist vorzugsweise weniger als 0,5 Gew.-%, bevorzugt weniger als 0,3 Gew.-% Wasser, bezogen auf das Gesamtgewicht der Komponenten (b) bis (e), auf.

Ein erfindungsgemäßes kompaktes Polyisocyanurat wird erhalten, in dem die Komponenten (a) bis (e) eines erfindungsgemäßen Polyisocyanuratsystems vermischt und ausgehärtet werden. Vorzugsweise werden dabei die Polyisocyanatkomponente (a) und die Komponenten (b) bis (e) in solchen Mengen zur Umsetzung gebracht werden, dass der Isocyanatindex 150 bis 700, bevorzugt 180 bis 400 beträgt. Dies kann dabei sowohl durch Sprühtechniken als auch durch RIM-Techniken in Hochdruck- oder Niederdruckvermischung erfolgen. RIM- und Sprühtechniken zur Herstellung von Polyurethanteilen sind bekannt und beispielsweise beschrieben im "Kunststoffhandbuch, Band 7, Polyurethane", Carl Hanser-Verlag, 3. Auflage 1993, Kapitel 4 und 5.2.2 und 8.1.1.

Zur Herstellung der erfindungsgemäßen Polyurethanformteile im RIM-Verfahren werden die Polyisocyanate (a) mit den Verbindungen mit gegenüber Isocyanaten reaktiven Gruppen (b) und den Katalysatoren (c) sowie gegebenenfalls Kettenverlängerern (d) und Füllstoffe und weitere Additive (e) zu einer Reaktionsmischung vermischt, in eine Form gegeben und zum Polyurethanelastomer ausgehärtet. Werden als Füllstoffe Gewebematten wie Glasfaser- oder Naturfasermatten eingesetzt, werden diese Matten beispielsweise in einer Form vorgelegt und die Reaktionsmischung auf diese Füllstoffe gegeben. Die Vermischung erfolgt dabei vorzugsweise im Hochdruckverfahren. Dabei werden vorzugsweise die Verbindungen mit gegenüber Isocyanaten reaktiven Gruppen (b) die Katalysatoren (c) sowie die gegebenenfalls enthaltenen Kettenverlängerer (d) und Füllstoffe und weitere Additive (e) zu einer Polyolkomponente vereinigt. Die Polyolkomponente und Polyisocyanate (a) werden dann mit hohem Druck von jeweils mindestens 100, vorzugsweise 100 bis 300 bar in eine Mischkammer eingespritzt und dort vereinigt. Der Druckabfall zum Ausgang der Mischkammer beträgt mindestens 50 bar, bevorzugt 50 bis 250 bar. Mit diesem Verfahren ist es möglich, große komplexe Formen mit Fließwegen von bis zu 3 Metern zu füllen. Vorzugsweise werden die Polyolkomponente und Isocyanate auf eine Temperatur zwischen 30 und 120 °C, bevorzugt auf 50 bis 100 °C temperiert. Die Formtemperatur beträgt vorzugsweise zwischen 70 bis 130 °C, besonders bevorzugt zwischen 85 und 110 °C. Dabei ist die Formtemperatur besonders bevorzugt variabel und ist beim Einfüllen der Reaktionsmischung vorzugsweise kleiner als 100 °C, besonders bevorzugt kleiner als 70 °C und insbesondere kleiner als 50 °C. Nach dem Einfüllen der Reaktionsmischung wird die Formtemperatur dann vorzugsweise auf 70 bis 130 °C, besonders bevorzugt auf 85 bis 110 °C erhöht.

Die Reaktionsmischungen, erhältlich durch Vermischen der erfindungsgemäßen Polyisocyanuratsysteme, weisen nach dem Vermischen bei Raumtemperatur eine geringe Grundviskosität von vorzugsweise 500 mPas und weniger, besonders bevorzugt 250 mPas und weniger auf, so dass die erfindungsgemäßen Polyisocyanuratsysteme eine hohe Fließfähigkeit aufweisen und sowohl in Sprayanwendungen als auch in RIM-Anwendungen eingesetzt werden können. Weiter weisen Reaktionsmischungen, erhältlich durch Vermischen der erfindungsgemäßen Polyisocyanuratsysteme, eine lange offene Zeit auf, in der die Viskosität maximal auf das 10fache der Grundviskosität ansteigt. Vorzugsweise ist diese offene Zeit größer als eine Minute, wodurch sich erfindungsgemäße Polyisocyanuratsysteme hervorragend zur Herstellung von großen Polyisocyanuratteilen, die beispielsweise als Verkleidungsteile von Maschinen eingesetzt werden können, eignen. Ist die Reaktion angesprungen, reagieren die erfindungsgemäßen Polyisocyanuratsysteme schnell zum fertigen Polyisocyanurat aus.

Durch die lange offene Zeit der erfindungsgemäßen Reaktionsmischung können kompliziertere Formen langsamer gefüllt werden. Dies führt zu verbesserten Formteilen, da durch die langsameren Fließgeschwindigkeiten die häufig an Ecken und Kanten der Fließwege entstehenden Fehlerstellen im Formteil vermieden werden können.

Die erfindungsgemäßen Polyisocyanurate weisen eine hohe Wärmeformbeständigkeit der nicht nachgetemperten Teile, eine hohe Schlagzähigkeit, eine hohe Bruchdehnung und eine hohe Steifigkeit bei hoher Elastizität auf und eignen sich daher hervorragend zur Herstellung von Verkleidungsteilen von Maschinen oder Fahrzeugen, wie beispielsweise Automobilen und Nutzfahrzeugen. Dabei kann die Wärmeformbeständigkeit durch Nachtempern weiter erhöht werden. Des weiteren weisen die erfindungsgemäßen Polyisocyanate eine geringe Feuchtigkeitsaufnahme und eine hohe Hydrolysestabilität auf.

Die vorliegende Erfindung soll durch die nachfolgenden Beispiele veranschaulicht werden.

### Beispiele

Zur Herstellung von Polyisocyanuratformteilen wurden gemäß Tabelle 1 Reaktionsmischungen bei Raumtemperatur hergestellt und in eine geschlossene, auf 90 °C temperierte Form gegeben. Die Einsatzstoffe sind dabei in Gewichtsteilen angegeben. Nach 3 Minuten wurden die Formteile entnommen und 24 Stunden bei Raumtemperatur gelagert. Anschließend wurde die Wärmeformbeständigkeit Vicat A und Vicat B gemäß DIN EN ISO 306 gemessen.

**Tabelle 1**

| | Beispiel 1 | Vergleich 1 | Vergleich 2 | Vergleich 3 |
|---|---|---|---|---|
| Polyol 1 | 37,19 | 37,19 | 37,19 | 37,19 |
| Polyol 2 | 15,8 | 15,8 | 15,8 | 15,8 |
| Additiv | 2,79 | 2,79 | 2,79 | 2,79 |
| Kat 1 | 1,32 | | | |
| Kat 2 | | 1,32 | | |
| Kat3 | | | 1,32 | |
| Kat4 | | | | 1,32 |
| Füllstoff | 42,9 | 42,9 | 42,9 | 42,9 |
| Iso 1 | 186 | 186 | 186 | 186 |
| Index | 359 | 391 | 368 | 403 |
| Mischviskosität bei 25 °C [mPas] | 210 | 210 | 210 | 210 |
| offene Zeit | 100 s | 37 s | 30 s | 28 s |
| Vicat A | 194 °C | 169 °C | 168 °C | |
| Vicat B | 152 °C | 150 °C | 138 °C | 136 °C |
| Härte | 82 | 82 | 82 | 78 |

Dabei bedeuten:
Polyol 1: Polypropylenoxid mit einer OH-Zahl von 104 mg KOH/g und einer Funktionalität von 2
Polyol 2: Polypropylenoxid mit einer OH-Zahl von 248 mg KOH/g und einer Funktionalität von 2
Additiv: Wasserabsorptionsmittel dispergiert in Ricinusöl
Kat 1: 36 Gew.-% Kaliumformiat gelöst in Monoethylenglycol
Kat 2: 85 Gew.-% Kaliumoktanoat gelöst in Diethylenglycol
Kat 3: 47 Gew.-% Kaliumacetat gelöst in Monoethylenglycol
Kat 4: Katalysator DABCO TMR 2 (Firma Air Products).
Füllstoff: Quarzmehl, mittlere Teilchengröße 4 µm
Iso 1: Isocyanatprepolymer aus 4,4'-MDI, carbodiimidmodifiziertes 4,4'-MDI (1,75 Gew.-%, bezogen auf das Gesamtgewicht des eingesetzten Isocyanats) und Polypropylenoxid mit einer OH-Zahl von 104 mg KOH/g und einer Funktionalität von 2; NCO-Gehalt = 20 %

Aus Tabelle 1 ist ersichtlich, dass die Verwendung von Kaliumformiat als Katalysator zu einer verlängerten offenen Zeit und zu einer verbesserten Wärmeformbeständigkeit führt.

## Patentansprüche

1. Polyisocyanuratsystem zur Herstellung eines kompakten Polyisocyanurats, enthaltend
(a) Polyisocyanate auf Basis von aromatischen Isocyanaten mit einer Funktionalität von kleiner 2,5,
(b) Verbindungen mit gegenüber Isocyanaten reaktiven Gruppen, enthaltend mindestens 40 % sekundäre Hydroxylgruppen,
(c) Katalysatoren, enthaltend Kaliumformiat, und gegebenenfalls
(d) Kettenverlängerer und
(e) Füllstoffe und weitere Additive.

2. Polyisocyanuratsystem nach Anspruch 1, **dadurch gekennzeichnet, dass** das Polyisocyanat (a) aus monomerem Diphenylmethandiisocyanat, das bis zu 10 Gew.-% carbodiimid, uretdion-, allophanat- und/oder uretoniminmodifiziertes Diphenylmethandiisocyanat enthält, besteht.

3. Polyisocyanuratsystem nach Anspruch 1, **dadurch gekennzeichnet, dass** Polyisocyanat ein Prepolymer mit einem NCO-Gehalt von 5 bis 25 Gew.-% NCO ist.

4. Polyisocyanuratsystem nach Anspruch 3, **dadurch gekennzeichnet, dass** das Prepolymer durch Reaktion von monomerem Diphenylmethandiisocyanat, das bis zu 10 Gew.-% carbodiimid, uretdion-, allophanat- und/oder uretoniminmodifiziertes Diphenylmethandiisocyanat enthält, und Polypropylenoxyd mit einer Funktionalität von 2 bis 4 erhalten wurde.

5. Polyisocyanuratsystem nach einem der Ansprüche 1 bis 4, **dadurch gekennzeichnet, dass** die Verbindungen mit gegenüber Isocyanaten reaktiven Gruppen (b) zumindest 80 % sekundäre OH-Grupen enthalten.

6. Polyisocyanuratsystem nach einem der Ansprüche 1 bis 5, **dadurch gekennzeichnet, dass** die Verbindungen mit gegenüber Isocyanaten reaktiven Gruppen (b) aus Polypropylenoxid mit einer Funktionalität von 2 bis 4 besteht.

7. Polyisocyanuratsystem nach einem der Ansprüche 1 bis 5, **dadurch gekennzeichnet, dass** die gegenüber Isocyanaten reaktive Verbindungen mindestens ein Polyersterpolyol beinhalten, dessen Monomerkomponenten 1 bis 20 Mol-% eines hydrophoben Stoffes enthalten.

8. Polyisocyanuratsystem nach einem der Ansprüche 1 bis 7, **dadurch gekennzeichnet, dass** der Kettenverlängerer Dipropylenglycol ist.

9. Polyisocyanuratsystem nach einem der Ansprüche 1 bis 8, **dadurch gekennzeichnet, dass** der Füllstoff Glasfaser ist.

10. Polyisocyanuratsystem nach einem der Ansprüche 1 bis 8, **dadurch gekennzeichnet, dass** der Füllstoff ein Quarzmehl ist.

11. Polyisocyanuratsystem nach einem der Ansprüche 1 bis 10, **dadurch gekennzeichnet, dass** die Komponenten (b) bis (e) weniger als 0,5 Gew.-%, bevorzugt weniger als 0,3 Gew.-% Wasser enthalten.

12. Verfahren zur Herstellung eines kompakten Polyisocyanurats durch Vermischen und Aushärten der Komponenten (a) bis (e) eines Polyisocyanuratsystems nach Anspruch 1 bis 11.

13. Verfahren nach Anspruch 12, **dadurch gekennzeichnet, dass** zur Herstellung des Polyisocyanurats die Polyisocyanatkomponente (a) und die Komponenten (b) bis (e) in solchen Mengen zur Umsetzung gebracht werden, dass der Isocyanatindex 150 bis 700 beträgt.

14. Verfahren nach Anspruch 12 oder 13, **dadurch gekennzeichnet, dass** die Herstellung des kompakten Polyisocyanurats durch Sprühtechniken oder RIMTechniken erfolgt.

15. Kompaktes Polyisocyanurat, herstellbar nach einem Verfahren gemäß einem der Ansprüche 12 bis 14.

16. Formteile, enthaltend ein kompaktes Polyisocyanurat nach Anspruch 15.

## Claims

1. A polyisocyanurate system for producing a compact polyisocyanurate, comprising
(a) polyisocyanates based on aromatic isocyanates and having a functionality of less than 2.5,
(b) compounds having groups which are reactive toward isocyanates and comprise at least 40% secondary hydroxyl groups,
(c) catalysts comprising potassium formate and, if appropriate,
(d) chain extenders and
(e) fillers and further additives.

2. The polyisocyanurate system according to claim 1, wherein the polyisocyanate (a) comprises monomeric diphenylmethane diisocyanate comprising up to 10% by weight of carbodiimide-, uretdione-, allophanate- and/or uretonimine-modified diphenylmethane diisocyanate.

3. The polyisocyanurate system according to claim 1, wherein the polyisocyanate is a prepolymer having an NCO content of from 5 to 25% by weight of NCO.

4. The polyisocyanurate system according to claim 3, wherein the prepolymer has been obtained by reaction of monomeric diphenylmethane diisocyanate comprising up to 10% by weight of carbodiimide-, uretdione-, allophanate- and/or uretonimine-modified diphenylmethane diisocyanate and polypropylene oxide having a functionality of from 2 to 4.

5. The polyisocyanurate system according to any of claims 1 to 4, wherein the compounds having groups which are reactive toward isocyanates (b) comprise at least 80% secondary OH groups.

6. The polyisocyanurate system according to any of claims 1 to 5, wherein the compounds having groups which are reactive toward isocyanates (b) comprise polypropylene oxide having a functionality of from 2 to 4.

7. The polyisocyanurate system according to any of claims 1 to 5, wherein the compounds which are reactive toward isocyanates comprise at least one polyester polyol whose monomer components comprise from 1 to 20 mol% of a hydrophobic substance.

8. The polyisocyanurate system according to any of claims 1 to 7, wherein the chain extender is dipropylene glycol.

9. The polyisocyanurate system according to any of claims 1 to 8, wherein the filler is glass fibers.

10. The polyisocyanurate system according to any of claims 1 to 8, wherein the filler is a quartz flour.

11. The polyisocyanurate system according to any of claims 1 to 10, wherein the components (b) to (e) comprise less than 0.5% by weight, preferably less than 0.3% by weight, of water.

12. A process for producing a compact polyisocyanurate by mixing and curing the components (a) to (e) of a polyisocyanurate system according to any of claims 1 to 11.

13. The process according to claim 12, wherein the polyisocyanate component (a) and the components (b) to (e) are reacted in such amounts that the isocyanate index is from 150 to 700 in order to produce the polyisocyanurate.

14. The process according to claim 12 or 13, wherein the compact polyisocyanurate is produced by means of spray techniques or RIM techniques.

15. A compact polyisocyanurate which can be produced by a process according to any of claims 12 to 14.

16. A molding comprising a compact polyisocyanurate according to claim 15.

## Revendications

1. Système de polyisocyanurate pour la préparation d'un polyisocyanurate compact, contenant
(a) des polyisocyanates à base d'isocyanates aromatiques ayant une fonctionnalité inférieure à 2,5,
(b) des composés à groupes réactifs vis-à-vis d'isocyanates, contenant au moins 40 % de groupes hydroxy secondaires,
(c) des catalyseurs, contenant du formiate de potassium, et éventuellement
(d) des prolongateurs de chaîne et
(e) des charges et d'autres additifs.

2. Système de polyisocyanurate selon la revendication 1, **caractérisé en ce que** le polyisocyanate (a) est constitué de diphénylméthane-diisocyanate monomère qui contient jusqu'à 10 % en poids de diphénylméthane-diisocyanate modifié par carbodiimide, urétdione, allophanate et/ou urétonimine.

3. Système de polyisocyanurate selon la revendication 1, **caractérisé en ce que** le polyisocyanate est un prépolymère ayant une teneur en NCO de 5 à 25 % en poids de NCO.

4. Système de polyisocyanurate selon la revendication 3, **caractérisé en ce que** le prépolymère a été obtenu par réaction d'un diphénylméthanediisocyanate monomère qui contient jusqu'à 10 % en poids de diphénylméthane-diisocyanate modifié par carbodiimide, urétdione, allophanate et/ou urétonimine et de polyoxypropylène ayant une fonctionnalité de 2 à 4.

5. Système de polyisocyanurate selon l'une quelconque des revendications 1 à 4, **caractérisé en ce que** les composés (b) à groupes réactifs vis-à-vis d'isocyanates contiennent au moins 80 % de groupes OH secondaires.

6. Système de polyisocyanurate selon l'une quelconque des revendications 1 à 5, **caractérisé en ce que** les composés (b) à groupes réactifs vis-à-vis d'isocyanates consistent en polyoxypropylène ayant une fonctionnalité de 2 à 4.

7. Système de polyisocyanurate selon l'une quelconque des revendications 1 à 5, **caractérisé en ce que** les composés réactifs vis-à-vis d'isocyanate comportent au moins un polyesterpolyol dont les composants monomères contiennent de 1 à 20 % en moles d'une substance hydrophobe.

8. Système de polyisocyanurate selon l'une quelconque des revendications 1 à 7, **caractérisé en ce que** le prolongateur de chaîne est le dipropylèneglycol.

9. Système de polyisocyanurate selon l'une quelconque des revendications 1 à 8, **caractérisé en ce que** la charge consiste en fibre de verre.

10. Système de polyisocyanurate selon l'une quelconque des revendications 1 à 8, **caractérisé en ce que** la charge est une poudre de quartz.

11. Système de polyisocyanurate selon l'une quelconque des revendications 1 à 10, **caractérisé en ce que** les composants (b) à (e) contiennent moins de 0,5 % en poids, de préférence moins de 0,3 % en poids d'eau.

12. Procédé pour la préparation d'un polyisocyanurate compatible, par mélange et durcissement des composants (a) à (e) d'un système de polyisocyanurate selon l'une quelconque des revendications 1 à 11.

13. Procédé selon la revendication 12, **caractérisé en ce que** pour la préparation du polyisocyanurate on fait réagir le composant polyisocyanate (a) et les composants (b) à (e) en des quantités telles que l'indice d'isocyanate est de 150 à 700.

14. Procédé selon la revendication 12 ou 13,
**caractérisé en ce que** la préparation du polyisocyanurate compact s'effectue par des techniques de pulvérisation ou des techniques de RIM (moulage par injection-réaction).

15. Polyisocyanurate compact, pouvant être préparé conformément à un procédé selon l'une quelconque des revendications 12 à 14.

16. Pièces moulées, contenant un polyisocyanurate compact selon la revendication 15.
